# EUROPEAN PATENT SPECIFICATION

(11) **EP 4 098 687 B1**
(45) Date of publication and mention of the grant of the patent: **01.01.2025**
(21) Application number: 21189552.9
(22) Date of filing: 04.08.2021
(51) Int. Cl.: C08J 11/00, C08K 11/00, C08L 23/06, C08L 75/00, C12F 3/06, C12G 1/08, C08L 75/04

(54) **POLYMER-BIOFILLER COMPOSITE MATERIAL FROM WASTE OF WINEMAKING PROCESSES AND PROCESS FOR ITS PREPARATION**
POLYMER-BIOFÜLLSTOFFVERBUNDMATERIAL AUS ABFÄLLEN VON WEINHERSTELLUNGSVERFAHREN UND SEIN HERSTELLUNGSVERFAHREN
MATÉRIAU COMPOSITE POLYMÈRE-BIOCHARGE À PARTIR DE DÉCHETS DE PROCESSUS DE VINIFICATION ET SON PROCÉDÉ DE PRÉPARATION

(30) Priority: 01.06.2021 IT 202100014366
(43) Date of publication of application: 07.12.2022
(73) Proprietor: Cheers Srl, 30026 Portogruaro (VE) (IT)
(72) Inventor: MORETTI, ELISA, 30026 PORTOGRUARO (VE) (IT); GREGGIO, MIRKO, 30026 PORTOGRUARO (VE) (IT); MENEGHETTI, STEFANO, 30026 PORTOGRUARO (VE) (IT); TALON, ALDO, 30026 PORTOGRUARO (VE) (IT)
(74) Representative: Leganza, Alessandro

(56) References cited:
- WO-A1-2017/035367
- WO-A1-2021/111481
- NANNI ALESSANDRO ET AL: "Wine By-Products as Raw Materials for the Production of Biopolymers and of Natural Reinforcing Fillers: A Critical Review", POLYMERS, vol. 13, no. 3, 26 January 2021 (2021-01-26), pages 381, XP055863116, DOI: 10.3390/polym13030381

## Description

### Technical field

The present invention relates to the field of eco-sustainable composite materials of polymeric matrix, in particular, of polymer-biofiller composite materials and, even more particularly, of polymer-biofiller composite materials from lees of winemaking processes and relative preparation.

### Background of the invention

Nowadays the need is felt to be available products of renewable origin (vegetable) or recovery/recycling, rather than those of fossil origin such as oil, which is not an unlimited resource but it is destined to run out, unlike products of renewable origin or recovery/recycling which can be produced indefinitely with continuity.

Moreover, due to the development of civilization and technological progress, more and more waste has been generated, which has led to an increase in environmental pollution leading to global deterioration. Given the present situation, many of the most developed countries in the world have established and encouraged resource recovery systems in order to recover/recycle waste.

An example of this is the wood-plastic material, disclosed in the patent CN102746681, wherein said wood-plastic material is obtained with distiller's grain as reinforcing phase and manufacturing method thereof. The increase in people's awareness of environmental protection has led to the awareness of using waste materials, from which to obtain materials that can then be used to make objects of common use, such as the aforementioned wood-plastic that uses waste wood, harvest straw, etc.

Also, the wine sector has been trying in recent years to reuse and recover waste, which otherwise, given their presence in the winemaking processes, would have to be disposed of, with relative costs. In particular, the main waste product of a winery is the lees generally disposed of with CER code 020703.

To this end, the recovery and enhancement, by means of innovative solutions, of the waste from the winemaking processes for the production of an eco-sustainable composite material with a thermoplastic polymer matrix can play a decisive role.

The patent document WO2017/35367 discloses a composition comprising a polymer component such as polyethylene, an organic waste component, such as for example grape pomace waste.

### Summary of the invention

The problem addressed by the present invention is therefore that of being able to effectively reuse waste from the wine industry, for example the lees, so as not to have to be disposed of as classified waste, thus avoiding the related costs, avoiding an increase in environmental pollution and, possibly, transforming said waste into value-added products, for example in the field of eco-design (footwear, bathroom furniture, indoor and outdoor home furnishings, automotive, etc.).

Therefore, the present invention solves the aforementioned problem by means of the polymer-biofiller composite material from the lees of the winemaking processes and related preparation process, as well as from the use and objects that see it used as outlined in the attached claims, the definitions of which are an integral part of the present description, thus allowing to have an eco-sustainable composite material with an absolutely versatile polymer matrix, for example for the application in the field of eco-design and the production of a wide range of eco-sustainable objects of daily use.

Furthermore, as an additional advantage, the proposed solution involves the use and enhancement of raw materials of renewable or recovery/recycling origin, specifically of agri-food waste, therefore being an eco-sustainable solution.

Further features and advantages of the polymer-biofiller composite material of the invention and of the methods of use will result from the description of the examples of embodiment of the invention, provided as an indication of the invention.

The specific object is a polymer-biofiller composite material obtained from the lees of winemaking processes and related preparation process, which in absolute terms could represent a source of strategic eco-sustainable industrial raw material.

### Brief description of the drawings

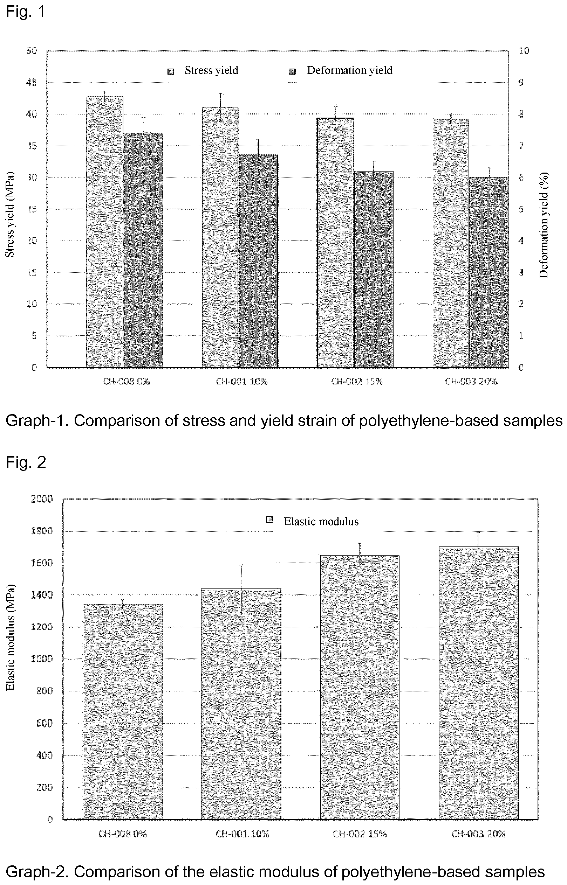

Fig. 1 shows a graph showing the comparison of stress and strain at yield of polyethylene-based samples.
Fig. 2 shows a graph relating to the comparison of the elastic modulus of polyethylene-based samples.

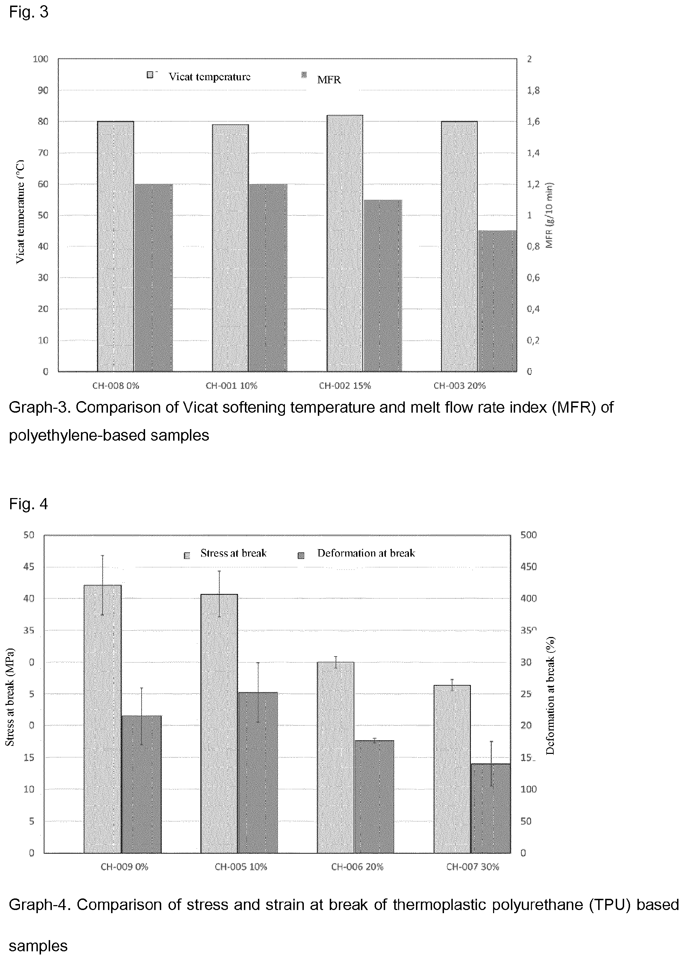

Fig. 3 shows a graph of the comparison of the Vicat softening temperature and the melt flow index rate (MFR) of the polyethylene-based samples.
Fig. 4 shows a graph relating to the comparison of stress and strain at break of thermoplastic polyurethane (TPU) based samples.

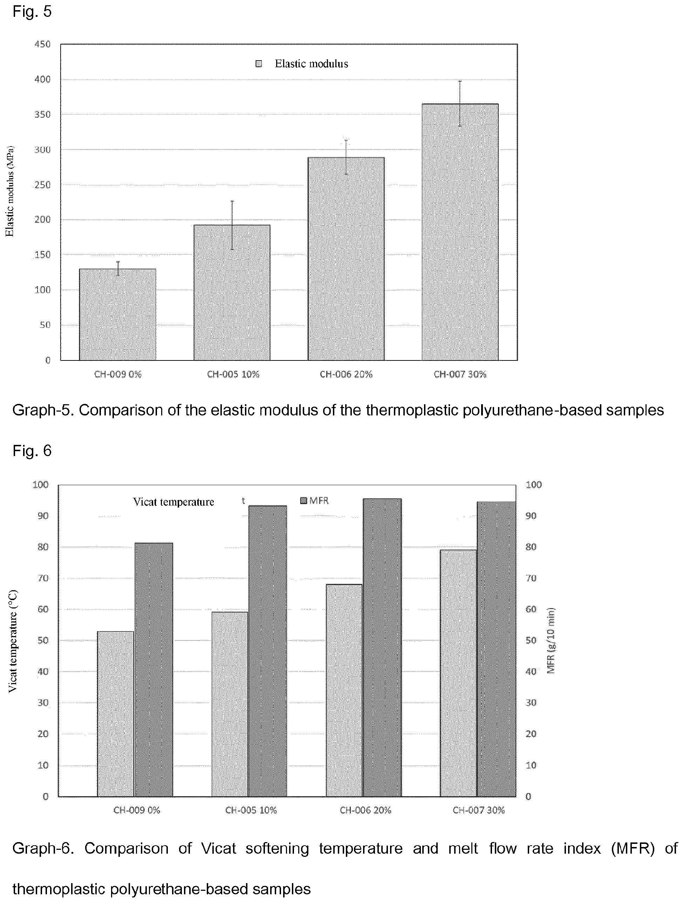

Fig. 5 shows a graph relating to the comparison of the elastic modulus of thermoplastic polyurethane-based samples.
Fig. 6 shows a graph concerning the comparison of the Vicat softening temperature and the melt flow index rate (MFR) of thermoplastic polyurethane-based samples.

### Detailed description of the Invention

For the purpose of describing this document, the term "and/or", when used in a listing of two or more items, means that any of the items listed can be used alone, or in any combination of two or more of the items listed.

For example, whether a combination is described as containing components A, B and/or C, or, A and/or B and/or C, the composition may contain only A; only B; only C; A and B in combination; A and C in combination; B and C in combination; or A, B and C in combination.

The terms "comprises", "comprising" or any other variation thereof, mean to cover a non-exclusive inclusion, such that a system, method, use, etc. which includes a list of elements, that does not include only those elements, but may include other elements not expressly listed or related to that system, method, use, etc.

An element followed by "includes... a..." does not prevent, without further constraints, the existence of further identical elements in the system, method or use comprising the element.

Generally, at the end of the winemaking and wine clarification process, the sediment that remains is the so-called lees, composed of yeast cells, residual plant bacteria and, to a large extent, bentonite. Bentonite is a clayey phyllosilicate used by wineries to reduce protein instability and precipitate suspended solids responsible for the clouding of wine over time.

A method has been studied to recover and reinsert into the production circuit the main waste product of a winery, called lees, in fact, otherwise disposed of with CER code 020703 using it as a bio-filler within thermoplastic polymeric matrices.

An object of the present invention is therefore a polymer-biofiller composite material from lees of winemaking processes comprising or alternatively consisting of:
- from 5% to 50% by weight of biofiller from lees of winemaking processes and
- a polymer TPU.

It has in fact been surprisingly found that the material of the present invention and related preparation process allows to use and valorize an agri-food waste, transforming it into a "green" resource to be used as a biofiller in thermoplastic polymeric matrices, i.e. a plastic prepared from ingredients natural. This material finds application in many sectors of eco-sustainable design (footwear, bathroom furniture, indoor and outdoor home furnishings, automotive, etc.), since the polymer-biofiller composite maintains workability and mechanical characteristics compatible with compounds prepared with traditional fillers, raw materials with a higher environmental impact.

In the specific object, it is a new polymer-biofiller composite material obtained from the lees of the winemaking processes, which in absolute terms can represent a strategic eco-sustainable raw material source.

Lees mean the waste or residues obtained or remaining at the end of the winemaking and wine clarification process comprising yeast cells, bacteria, plant residues and to a large extent from bentonite.

Specifically, the lees refer to the main waste product of a winery, i.e. the final waste of the winemaking chain, generally disposed of with CER code 020703.

More specifically, the lees mean the sediment which forms following the winemaking and wine clarification process, and which is then recovered by a rotary vacuum filter having a silico-aluminate as filter layer.

The object of the present invention is a polymer-biofiller composite material from lees of winemaking processes comprising or alternatively consisting of:
- from 5% to 50% by weight of biofiller from lees of winemaking processes and
- a polymer TPU.

In particular, said composite material has a Vicat softening temperature comprised from 53°C to 79°C or a fluidity index comprised from 0.9 to 1.2 g/10 min and from 81 to 95 g/10 min.

According to a preferred embodiment of the present invention, the biofiller is comprised from 15% to 40% by weight or from 20% to 35% by weight.

Generally speaking, biofiller means natural or synthetic chemical substances added as a filler to certain materials to improve their technological characteristics; additive, charge. However, in the present invention the term biofiller indicates the lees of winemaking and/or wine clarification processes.

HDPE (high-density polyethylene) abbreviation of high-density polyethylene, it means a thermoplastic polymer. It is a polymer that is commonly recycled.

TPU (thermoplastic polyurethane) abbreviation of thermoplastic polyurethane, it means any of the class of polyurethane plastics with many properties, including elasticity, transparency and resistance to oil, grease and abrasion. Technically, they are thermoplastic elastomers consisting of linear segmented block copolymers composed of hard and soft segments.

TPU is a polymer which is produced by the polycondensation of an isocyanate with a diol. The chemical nature of this chain influences the mechanical behavior and chemical resistance of the material: the longer the chain, the more the material assumes characteristics similar to natural rubber. Like all thermoplastic elastomers, TPU is elastic and processable at molten state and can be used on extrusion, injection molding, blow molding and compression equipment.

TPU is one of the polymers with greater resistance to oils and abrasion, and is impermeable to water and gas. The excellent elasticity and the exceptional elongation ratio guarantee durability and tear resistance; in addition, TPU oxidizes less easily in the air than hydrocarbon-based rubbers.

TPU is an extremely versatile material: more than any other thermoplastic elastomer, it could provide a considerable number of combinations of physical properties, making it extremely flexible and adaptable to multiple uses. This versatility derives from the unique structure of the TPU which results in high resilience, as well as resistance to shocks, abrasions, tears, atmospheric agents and even hydrocarbons.

Its use is recommended for pipes, gaskets, cables and wires, for technical clothing, for footwear, and for all those applications where it is necessary to have a material able to reply rubber and guarantee strength and flexibility, further a long service life.

The introduction of the biofiller into the polyethylene matrix (HDPE) produces a variation of the mechanical properties similar to other mineral fillers (talc, mica, calcium carbonate), used industrially for the reinforcement of polyolefins. Against a negligible decrease in the yield stress and a limited reduction in the yield deformation, an increase in the elastic modulus is recorded which is proportional to the filler content introduced into the polymer.

In the case where the polymer is HDPE, the Vicat softening temperature of the composite material of the invention is comprised from 79°C to 82°C, highlighting the absence of a plasticizing effect of the organic fraction (comparative, not of invention).

In the case where the polymer is HDPE, the melt index decreases as the filler content increases, remaining within the range of fluidity values comprised from 0.9 to 1.2 g/10 min (comparative, not of invention).

In the case of TPU-based composites, the values relating to yield are not reported since, in accordance with the indications of the rule adopted for the measurements, the stress-strain curves of these materials do not have a yield point.

The introduction of the biofiller in the TPU involves a significant reduction in the stress at break and a limited decrease in the deformation at break. As in the case of HDPE polyethylene, as the filler content increases, there is an increase in the elastic modulus. The study of the polymer-biofiller composite material from lees of winemaking processes consisting of the TPU polymer, having the Vicat softening temperature comprised from 53°C to 79°C and the fluidity index comprised from 81 to 95 g/10 min , leads to the hypothesis that the organic component present inside the filler acts as a lubricant in the melt (phenomenon seen in extrusion) without affecting the thermal properties of the polymer. The increase in the softening temperature as a function of the increase in the content of mineral fraction is an advantageous phenomenon in this type of materials.

Another object of the present invention is a process for the preparation of the material as previously described, comprising or, alternatively, consisting of the following steps:
a) centrifuging the lees until a solid is obtained;
b) washing the solid obtained from step a) with a hydro-alcoholic solution;
c) drying the product obtained from step b);
d) grinding and sifting the product resulting from step c) obtaining the biofiller from the lees of winemaking processes;
e) dosing the biofiller of step d) into an extruder containing a polymer TPU.

In step a) the lees are centrifuged, i.e. the sediment that is formed following the winemaking and wine clarification process, and which is then recovered by a rotary vacuum filter having a silico-aluminate, perlite, as a filter layer. Said lees in step a) are centrifuged, to separate the wine still contained within it, until a solid is obtained; said solid can be red or yellowish (depending on the color of the starting wine).

According to a preferred embodiment of the process of the present invention, the solution of step b) is a H₂O/iso-PrOH mixture, i.e. water/isopropanol.

According to a preferred embodiment of the process of the present invention, step b) is carried out at room temperature.

In step b), the solid obtained from step a) is washed with the H₂O/iso-PrOH mixture and kept under stirring with a rod stirrer and at room temperature for 3-8 hours.

In step c), the solid is centrifuged again.

According to a preferred embodiment of the process of the present invention, the drying of step c) is carried out at a temperature comprised from 45°C to 90°C.

Specifically, the drying of step c) is performed in the stove.

According to a preferred embodiment of the process of the present invention, the grinding of the step d) is carried out by means of a ball mill.

Ball mill (or sphere mill or marble mill) means a type of mill used to grind materials into very fine powder to be used in processes for the preparation of minerals, medical tretment, paints, pyrotechnics and ceramics.

Grinding means a process of controlled reduction of the particle size of a solid material. The purpose of the grinding is to obtain a fairly homogeneous product with precise granulometric characteristics.

According to a preferred embodiment of the process of the present invention, the biofiller material of step d) has a particle size lower than 350 µm, preferably comprised between 10 and 350 µm.

In particular, in step e) the biofiller of step d) is dosed in the range comprised from 5% to 50% by weight, in an extruder containing a polymer TPU, preferably, in the form of pellets.

Extruder means a machine, used above all in the plastics industry, which allows to obtain extrusions, i.e. shapes with a constant section predetermined by the shape of the die and of length determined by the cutting interval.

According to a preferred embodiment of the process of the present invention, in step e) the dosage of the biofiller of step d) is carried out by means of a double screw doser.

In particular, in step e) the dosing of the biofiller of step d), by means of a double screw doser, is carried out in a constant and reproducible manner.

According to a preferred embodiment of the process of the present invention, in step e) the screw speed is comprised from 50 rpm to 350 rpm.

According to a preferred embodiment of the process of the present invention, the dosage of step e) is carried out at a temperature comprised from 170°C to 220°C.

The polymer-biofiller composite material from lees of winemaking processes thus obtained, as described above, is characterized below on the basis of the determination:
- mechanical traction characteristics,
- the Vicat softening temperature,
- the mass flow rate (MFR).

In order to characterize the produced materials, in particular for the determination of the mechanical tensile properties, Dog-bone specimens (EN ISO 527-5) were made starting from the composite material of the present invention obtained using TPU with biofiller at different percentages.

As for traditional materials, also for composites the simplest and at the same time most used characterization test is the tensile test. It allows the determination of the modulus of elasticity, stress and strain.

Since the composite material is available in the form of laminates, specimens with rectangular cross section are usually used. In particular, with reference to the geometry of the heads, two types of specimens are distinguished: "Dog-bone" specimens with joined heads and straight specimens with end reinforcements.

In the present invention Dog-Bone specimens were used for the determination of the mechanical properties.

The measurements were carried out using a QUASAR 25 GALDABINI dynamometer in accordance with the EN ISO 527: 2019 rule and with the following test speeds:
a. 1 mm/min for the determination of the elastic modulus;
b. 20 mm/min for the determination of the stress and deformation both at yield and at break.

With regard to the determination of the Vicat softening temperature, the following was carried out: for each sample, three specimens having dimensions 4 x 10 x 25 mm were made by injection molding.

The analyzes were carried out using the VICAT CEAST HDT analyzer in accordance with EN ISO 306: 2013 rule and with the following settings:
a. Method B/50 for HDPE-based samples;
b. Method B/120 for TPU-based samples.

Finally, the determination of the mass flow rate index (MFR) was carried out as better described below.

The analyzes were carried out using the MELT FLOW TESTER 2000 CEAST instrument in accordance with EN ISO 1133: 2012 rule and adopting the following test methods:
a. Method 190°C/5 kg;
b. Method 230°C/2.16 kg.

The resulting polymer-biofiller composite material from lees of winemaking processes therefore comprises or alternatively consists of:
- from 5 to 50% by weight of biofillers from lees of winemaking processes and
- a polymer TPU,
and has a Vicat softening temperature comprised from 53°C to 79°C or a flow index comprised from 81 to 95 g/10 min.

Another object is a process for the preparation of biofillers, comprising or, alternatively, consisting of the following steps:
a) centrifuging the lees until a solid is obtained;
b) washing the solid obtained from step a) with a hydro-alcoholic solution;
c) drying the product obtained from step b);
d) grinding and sifting the product resulting from step c) obtaining the biofiller from the lees of winemaking processes.

The process for the preparation of biofiller comprises or, alternatively, consists of the steps a), b), c) and d), as described above.

Another object of the present invention is therefore the polymer-biofiller composite material from lees of winemaking obtainable according to the process of the present invention.

Another object of the present invention is an object comprising a polymer-biofiller composite material from lees of winemaking, as described in the present invention.

Finally, a further object is the use of the polymer-biofiller composite material from lees of winemaking , as described in the present invention for use in the field of eco-design.

According to a preferred embodiment of the present invention, the use of the polymer-biofiller composite material from lees of winemaking is preferred where the field of eco-design includes at least the following fields: footwear, bathroom furnishings, home furnishings indoor and outdoor, automotive.

From the above description the advantages of the material and related preparation process of the present invention are evident, which, albeit in its relatively simple realization, solves many problems at the same time, with one and only one preparation process.

### EXPERIMENTAL PART

### Determination of mechanical traction characteristics

For the measurement of the mechanical properties, Dog-Bone EN ISO 527-5A specimens were used, made within the previous order (POL0121 rev01-2021). The measurements were carried out using a QUASAR 25 GALDABINI dynamometer in accordance with the EN ISO 527: 2019 rule and with the following test speeds:
a. 1 mm/min for the determination of the elastic modulus;
b. 20 mm/min for the determination of the stress and deformation both at yield and at break.

The results are reported in Tables 1 and 3, respectively for the polyethylene-based samples and for the thermoplastic polyurethane-based samples.

### Determination of the Vicat softening temperature

For each sample, three test pieces having dimensions 4 x 10 x 25 mm were made by injection molding. The analyzes were conducted using the VICAT CEAST HDT analyzer in accordance with EN ISO 306: 2013 rule and with the following settings:
a. Method B/50 for samples CH-001, CH-002, CH-003, CH-008;
b. Method B/120 for CH-005, CH-006, CH-007, CH-009 samples.

The results are reported in Table 2 and 4, respectively for the polyethylene-based samples and for the thermoplastic polyurethane-based samples.

### Determination of the mass flow rate index (MFR)

The measurements were carried out using the granules produced during the previous composing activities, except for the samples CH-008 and CH-009 for which the virgin granules respectively PE and TPU were used. The analyzes were carried out using the MELT FLOW TESTER 2000 CEAST instrument in accordance with the EN ISO 1133: 2012 rule and adopting the following test methods:
a. 190°C/5 kg method for CH-001, CH-002, CH-003, CH-008 samples;
b. Method 230°C/2.16 kg for samples CH-005, CH-006, CH-007, CH-009 (the samples were dried at 80°C for one hour)

The results are reported in Table 2 and 4, respectively for the polyethylene-based samples and for the thermoplastic polyurethane-based samples.

### Results of the polyethylene-based samples

**Table 1 - Tensile mechanical properties of polyethylene-based samples**

| **Sample** | **Polymeric matrix** | **Content of charge % w/w** | **Stress yield (MPa)** | | **Deformation yield (%)** | | **Stress at break (MPa)** | | **Deformation at break (%)** | | **Elastic modulus (MPa)** | |
|---|---|---|---|---|---|---|---|---|---|---|---|---|
| | | | average \| sd | | average \| sd | | average \| sd | | average \| sd | | average \| sd | |
| CH-008 | PE | 0 | 42.7 | 0.8 | 7.4 | 0.5 | 20.8 | 4.2 | 25.5 | 2.1 | 1340 | 27 |
| CH-001 | PE | 10 | 41.0 | 2.2 | 6.7 | 0.5 | 21.2 | 3.0 | 13.5 | 3.0 | 1440 | 150 |
| CH-002 | PE | 15 | 39.4 | 1.8 | 6.2 | 0.3 | 20.1 | 0.9 | 9.4 | 2.1 | 1650 | 73 |
| CH-003 | PE | 20 | 39.2 | 0.8 | 6.0 | 0.3 | 26.0 | 2.5 | 7.4 | 0.5 | 1700 | 90 |

**Table 2 - Vicat softening temperature and melt flow rate index (MFR) of polyethylene-based samples**

| **Sample** | **Polymeric matrix** | **Content of charge % w/w** | **Vicat temperature °C** | **MFR g/10 min** |
|---|---|---|---|---|
| CH-008 | PE | 0 | 80 | 1.2 |
| CH-001 | PE | 10 | 79 | 1.2 |
| CH-002 | PE | 15 | 82 | 1.1 |
| CH-003 | PE | 20 | 80 | 0.9 |

The introduction of the filler in the polyethylene matrix has produced a variation of the mechanical properties similar to other mineral fillers used for the reinforcement of polyolefins.

Against a negligible decrease in the yield stress and a limited reduction in the yield deformation, there is a significant increase in the elastic modulus which is proportional to the filler content introduced into the polymer (as shown in Graph 1 and 2).

The stress and strain at break values are less significant than the previous ones in order to characterize the potential of these composites.

The measurement of the Vicat softening temperature highlights the absence of a plasticizing effect of the organic fraction. The fluidity index decreases as the filler content increases, remaining within the window of fluidity values accepted for the application for which this type of polyethylene is proposed (as shown in Graph 3).

### Results of the thermoplastic polyurethane-based samples

**Table 3 - Tensile mechanical properties of the thermoplastic polyurethane-based samples**

| **Sample** | **Polymeric matrix** | **Content of charge % w/w** | **Stress at break (MPa)** | | **Deformation at break (%)** | | **Elastic modulus (MPa)** | |
|---|---|---|---|---|---|---|---|---|
| | | | average \| sd | | average \| sd | | average \| sd | |
| CH-009 | TPU | 0 | 42.1 | 4.7 | 215 | 45 | 130 | 9.7 |
| CH-005 | TPU | 10 | 40.7 | 3.6 | 252 | 47 | 192 | 35 |
| CH-006 | TPU | 20 | 30.0 | 0.9 | 176 | 3.5 | 289 | 24 |
| CH-007 | TPU | 30 | 26.4 | 0.9 | 140 | 35 | 365 | 32 |

**Table 4 - Vicat softening temperature and melt flow rate index (MFR) of thermoplastic polyurethane-based samples**

| **Sample** | **Polymeric matrix** | **Content of charge % w/w** | **Vicat temperature °C** | **MFR g/10 min** |
|---|---|---|---|---|
| CH-009 | TPU | 0 | 53 | 81.3 |
| CH-005 | TPU | 10 | 59 | 93.3 |
| CH-006 | TPU | 20 | 68 | 95.5 |
| CH-007 | TPU | 30 | 79 | 94.5 |

In the case of the TPU-based composites, the values relating to yield have not been reported since, in accordance with the indications of the standard rule adopted for the measurements, the stress-strain curves of these materials do not have a yield point.

The introduction of the filler in the TPU involves a significant reduction in the stress at break and a limited decrease in the deformation at break (as shown in Graph 4). As in the case of polyethylene, as the filler content increases, there is an increase in the elastic modulus (as shown in Graph 5).

The study of the results of the trend of the Vicat softening temperature and of the fluidity index (as shown in Graph 6) leads to the hypothesis that the organic component present inside the filler acts as a lubricant in the melt (phenomenon already seen in extrusion) but does not negatively affect the thermal properties of the polymer. The increase in the softening temperature as a function of the increase in the content of mineral fraction is an expected (and desired) phenomenon in this type of materials.

The present invention also concerns the following points for which the Applicant reserves the right, in the event, to file divisional applications.
1. Process wherein step b) is carried out at room temperature.
2. Process wherein the drying of step c) is carried out at a temperature comprised from 45°C to 90°C.
3. Process wherein the grinding of step d) is carried out by means of a ball mill.
4. Process wherein in step e) the dosage of the biofiller of step d) is carried out by means of a double screw doser.
5. Process in which in step e) the dosage is carried out by means of a double screw doser wherein the screw speed is comprised between 50 and 350 rpm.
6. Use of the polymer-biofiller composite material from lees of winemaking processes in which the field of eco-design includes at least one of the following fields: footwear, bathroom furnishings, indoor and outdoor home furnishings, automotive.

## Claims

1. Polymer-biofiller composite material from lees winemaking processes comprising or alternatively consisting of:
- from 5% to 50% by weight of biofiller from lees of winemaking processes and
- a thermoplastic polyurethane (TPU).

2. Material according to claim 1, having a Vicat softening temperature comprised from 53°C to 79°C or a fluidity index comprised from 81 to 95 g/10 min.

3. Material according to any one of claims 1 to 2, wherein the biofiller is comprised from 15% to 40% by weight or from 20% to 35% by weight.

4. Process for the preparation of the material according to any one of claims 1 to 3, comprising or, alternatively, consisting of the following steps:
a) centrifuging the lees until a solid is obtained;
b) washing the solid obtain from step a) with a hydro-alcoholic solution;
c) drying the product obtained from step b);
d) grinding and sifting the product resulting from step c) obtaining the biofiller from the lees of winemaking processes;
e) dosing the biofiller of step d) into an extruder containing a TPU**.**

5. Process according to claim 4, wherein the solution of step b) is a H₂O/iso-PrOH mixture.

6. Process according to any one of claims 4 to 5, wherein the biofiller material of step d) has a particle size lower than 350 µm.

7. Process according to any one of claims 4 to 6, wherein in step e) the dosage of the biofiller of step d) is carried out at a temperature comprised from 170°C to 220°C.

8. Polymer-biofiller composite material from lees of winemaking processes obtainable according to the process of any one of claims 4 to 7.

9. Object comprising polymer-biofiller composite material from lees of winemaking processes according to any one of claims 1 to 3 or 8.

10. Use of the polymer-biofiller composite material from lees of winemaking processes according to any one of claims 1 to 3 or 8 for use in the field of eco-design.

## Patentansprüche

1. Polymer-Biofüllstoff-Verbundmaterial aus Hefeweinherstellungsprozessen, umfassend oder alternativ bestehend aus:
- 5 bis 50 Gewichtsprozent Biofüllstoff aus Trub aus Weinherstellungsprozessen und
- ein thermoplastisches Polyurethan-TPU.

2. Material nach Anspruch 1 mit einer Vicat-Erweichungstemperatur von 53°C bis 79°C oder einem Fließindex von 81 bis 95 g/10 Min.

3. Material nach einem der Ansprüche 1 bis 2, wobei der Biofüllstoff 15 bis 40 Gew.-% oder 20 bis 35 Gew.-% ausmacht.

4. Verfahren zur Herstellung des Materials nach einem der Ansprüche 1 bis 3, umfassend oder alternativ bestehend aus den folgenden Schritten:
a) Zentrifugieren der Hefe, bis ein Feststoff entsteht;
b) Waschen des aus Schritt a) erhaltenen Feststoffs mit einer hydroalkoholischen Lösung;
c) Trocknen des aus Schritt b) erhaltenen Produkts;
d) Mahlen und Sieben des aus Schritt c) resultierenden Produkts zur Gewinnung des Biofüllstoffs aus der Hefe von Weinherstellungsprozessen;
e) Dosierung des Biofüllstoffs aus Schritt d) in einen Extruder, der ein Polymer-TPU enthält.

5. Verfahren nach Anspruch 4, wobei die Lösung von Schritt b) eine H2O/iso-PrOH-Mischung ist.

6. Verfahren nach einem der Ansprüche 4 bis 5, wobei das Biofüllstoffmaterial von Schritt d) eine Partikelgröße von weniger als 350 µm aufweist.

7. Verfahren nach einem der Ansprüche 4 bis 6, wobei in Schritt e) die Dosierung des Biofüllstoffs aus Schritt d) bei einer Temperatur von 170°C bis 220°C durchgeführt wird.

8. Polymer-Biofüllstoff-Verbundmaterial aus Trub von Weinherstellungsprozessen, erhältlich nach dem Verfahren nach einem der Ansprüche 4 bis 7.

9. Gegenstand umfassend Polymer-Biofüllstoff-Verbundmaterial aus Trub von Weinherstellungsprozessen nach einem der Ansprüche 1 bis 3 oder 8.

10. Verwendung des Polymer-Biofüllstoff-Verbundmaterials aus Trub von Weinherstellungsprozessen nach einem der Ansprüche 1 bis 3 oder 8 zur Verwendung im Bereich Ökodesign.

## Revendications

1. Matériau composite polymère-biocharge issu de procédés de vinification sur lies comprenant ou alternativement constitué de :
- de 5% à 50% en poids de biocharge issue de lies de vinification et
- un TPU polyuréthane thermoplastique.

2. Matériau selon la revendication 1, présentant une température de ramollissement Vicat comprise de 53°C à 79°C ou un indice de fluidité compris de 81 à 95 g/10 min.

3. Matériau selon l'une quelconque des revendications 1 à 2, dans lequel la biocharge est comprise de 15% à 40% en poids ou de 20% à 35% en poids.

4. Procédé de préparation du matériau selon l'une quelconque des revendications 1 à 3, comprenant ou, alternativement, constitué des étapes suivantes :
a) centrifuger les lies jusqu'à obtention d'un solide ;
b) laver le solide obtenu à l'étape a) avec une solution hydro-alcoolique ;
c) sécher le produit obtenu à l'étape b) ;
d) broyer et tamiser le produit issu de l'étape c) obtention de la biocharge à partir des lies des procédés de vinification ;
e) doser la biocharge de l'étape d) dans une extrudeuse contenant un polymère TPU.

5. Procédé selon la revendication 4, dans lequel la solution de l'étape b) est un mélange H₂O/iso-PrOH.

6. Procédé selon l'une quelconque des revendications 4 à 5, dans lequel le matériau biofiller de l'étape d) a une granulométrie inférieure à 350 µm.

7. Procédé selon l'une quelconque des revendications 4 à 6, dans lequel à l'étape e) le dosage de la biocharge de l'étape d) est effectué à une température comprise de 170°C à 220°C.

8. Matériau composite polymère-biocharge issue de lies de procédés de vinification susceptible d'être obtenu selon le procédé de l'une quelconque des revendications 4 à 7.

9. Objet comprenant un matériau composite polymère-biocharge issue de lies de procédés de vinification selon l'une quelconque des revendications 1 à 3 ou 8.

10. Utilisation du matériau composite polymère-biocharge issue de lies de procédés de vinification selon l'une quelconque des revendications 1 à 3 ou 8 pour une utilisation dans le domaine de l'éco-conception.
